# EUROPEAN PATENT SPECIFICATION

(11) **EP 1 917 161 B1**
(45) Date of publication and mention of the grant of the patent: **07.04.2010**
(21) Application number: 06709728.7
(22) Date of filing: 14.02.2006
(51) Int. Cl.: B60P 3/06, B60P 3/12, B62D 55/30, B62D 55/108, A01D 90/00, B60D 1/66, B62D 63/06

(54) **TRAILER**
ANHÄNGER
REMORQUES AMELIOREES

(30) Priority: 19.04.2005 GB 0507826; 11.05.2005 GB 0509559
(43) Date of publication of application: 07.05.2008
(73) Proprietor: Baxter, James M., Scarisbrick Southport PR9 8AD (GB)
(72) Inventor: Baxter, James M., Scarisbrick Southport PR9 8AD (GB)
(74) Representative: White, Martin Paul
(86) International application number: PCT/GB2006/000491
(87) International publication number: WO 2006/111693

(56) References cited:
- WO-A-87/04671
- DE-A1- 10 333 482
- DE-U1- 29 812 101
- FR-A- 2 769 555
- US-A- 2 418 567
- US-A- 3 097 755
- US-A- 4 358 133
- US-A- 4 470 746
- US-A- 5 755 549
- PATENT ABSTRACTS OF JAPAN vol. 2003, no. 12, 5 December 2003 (2003-12-05) -& JP 2004 291912 A (ISEKI & CO LTD), 21 October 2004 (2004-10-21)
- PATENT ABSTRACTS OF JAPAN vol. 016, no. 103 (M-1221), 13 March 1992 (1992-03-13) -& JP 03 279039 A (DAISUKE FUJII), 10 December 1991 (1991-12-10)
- PATENT ABSTRACTS OF JAPAN vol. 2000, no. 12, 3 January 2001 (2001-01-03) -& JP 2000 255314 A (FURUKAWA CO LTD), 19 September 2000 (2000-09-19)

## Description

The present invention relates to trailers and to components for use therewith. It relates especially, but not exclusively, to farm trailers and to components for use therewith.

A trailer is typically hitched behind a motor vehicle to provide a convenient way of transporting a load from one location to another. The trailer can be relatively simple in construction, typically comprising a platform, two more wheels that support the platform and a hitch for hitching the drawbar of a trailer to the vehicle so that it can be towed. If desired, the trailer may also have one or more connectors for connecting to the vehicle so that power can be supplied (e.g. to operate lights or indicators). The trailer may also be provided with raised sides/ends to prevent the load falling off. In some cases the trailer may be enclosed.

German Utility Model Number DE 29812101 discloses a loading and transportation trailer. It includes two parallel sliding supports and a pulley that is located centrally between the two sliding supports. The loading and transportation trailer is said to be particularly suitable for recovering vehicles that have been damaged in accidents.

Trailers are particularly useful on a farm environment. They can be pulled by tractors or other farm vehicles and used to transport large amounts of farm produce or farm animals. However farm trailers occasionally become stuck, especially if used on soft ground.

This is a significant problem. Many farms are located on soft land, because of its fertility and/or because it may be relatively inexpensive. For example farms may sometimes be located on fen-land, marsh-land, bogs or paddy fields. They may even be on land reclaimed from the sea, from a lake or a river. This is well known in countries such as The Netherlands where many farms are on reclaimed polders.

Even ground that is normally well drained can become soft due to changes in weather conditions or environmental conditions. This can occur, for example, after prolonged or intense rain fall.
Additionally, there is an increased risk of flooding in many countries associated with climate change, deforestation etc. This can also lead to softer ground and can therefore accentuate the risk of trailers becoming stuck.

In some cases it may be possible for a farmer to wait until ground conditions have improved before using a trailer, so that there is less risk of the trailer becoming stuck. However this is not always practicable, especially if there is a significant risk of a crop spoiling if it is not harvested in time, or if it must reach a market-place by a particular date (e.g. to supply a supermarket).

In the case of farm animals it is often necessary to transport them at particular times. For example, it may be necessary to transport them to a cattle market, to an abattoir, or for breeding, shearing or veterinary purposes. Thus it may again not be practicable to wait until ground conditions improve. Indeed it may be particularly necessary to move farm animals when ground conditions are poor so as to move them to better grazing land or to stables. Whatever the reason for transporting the animals, there is still a risk of the trailer becoming stuck. This can be distressing to the animals. It may then be necessary to unload the animals until the trailer has been freed, but this can be a difficult and time-consuming operation. It will also be necessary to find a safe place where the animals can be kept without escaping, whilst the trailer is freed.

Even if it is possible to wait until soil conditions improve before using a trailer, this generally results in a significant delay. Furthermore, it is not always possible to predict accurately when ground conditions will improve, because of possible changes in weather conditions, variability of the water table, etc. In any event it will often be necessary to retain skilled labour until conditions improve and this can be expensive. Of course if ground conditions are permanently soft, then delaying using a trailer until ground conditions improve is simply not an option.

In the light of the foregoing considerations, it will be appreciated that in many cases a farmer may need to use a trailer even when there is a significant risk of the trailer becoming stuck. If the trailer does become stuck then may be possible to remove it by various methods. These include removing a load from the trailer, using a more powerful tractor, placing planks or ramps under the wheels to aid in providing traction for the tyres, partially deflating tyres, using farm staff to help push the trailer, etc. However these methods tend to be very time-consuming and tedious

Some farmers use specially modified tractors. For example, tractors with very large wheels can be used to try to obtain improved traction. Two or more such wheels may even be provided at each side of the tractor. However this can severely reduce the manoeuvrabilty of the vehicle, especially if it is desired to use the vehicle on narrow roads or tracks. It can also reduce the rear field of view of the driver of the tractor. Furthermore, this method is not always effective, especially if a trailer becomes firmly stuck. In such circumstances it may still be necessary to use an additional vehicle (e.g. to use an additional tractor either to push the trailer from behind or to provide additional towing force).

Another alternative is to use a tractor that has endless tracks, such as caterpillar tracks. Although this can be an improvement over using tractors with large wheels, it can also be a very expensive option if such tracks are to be fitted onto all of the tractors that a farmer might wish to use on soft ground. Typically a farmer will have several tractors and wish them all to be available for use. Furthermore, the provision of such tracks on a tractor does not necessarily prevent a trailer itself from sinking into soft ground.

Indeed trailers can become stuck even if the ground conditions are not particularly soft. This can arise, for example, if a trailer is itself heavy and/or if it is used to carry a large load. In these circumstances it may be possible to remove or reduce the load and/or to use some of the other approaches discussed above (e.g. to use a modified tractor). However none of these approaches are ideal. There is therefore a major need for an alternative approach to the problem of preventing trailers becoming stuck, or at least o reduce the likelihood thereof.

A still further problem is that of soil compaction. Even if a trailer does not become stuck, if it is heavy or is carrying a heavy load then this can still result in significant soil compaction. Soil compaction is also a problem if trailers are run many times over the same ground, as can occur with modem intensive farming techniques.

Soil compaction reduces the friability of soil and increases the risk of flooding. Compacted soil is also likely to be less fertile and can therefore result in reduced yields of many crops. It can lead to an increased risk of disease because of the poor soil conditions that may result. Although it is possible to plough compacted soil to try to restore soil quality this requires additional labour and therefore incurs further costs and time. Furthermore if the soil is heavily compacted it may be difficult to plough and/or it may be necessary to leave it fallow for some time after ploughing.

There is therefore also a major need to avoid or reduce soil compaction.

One aspect of the present invention seeks to address or at least to alleviate the afore-mentioned problems. These problems are not trivial, but are very long-standing and no entirely satisfactory solutions have been provided to date. This is despite the widespread use of tractors and trailers in many countries for nearly a hundred years.

The present invention takes a radically different approach from the prior art in providing a specially modified trailer upon which another trailer can be conveniently transported.

According to one aspect of the present invention there is provided a first trailer that can be used to load a second trailer thereon and to subsequently unload it; wherein the first trailer comprises a platform for supporting the second trailer during transportation, engaging means for releasably engaging the second trailer, a plurality of drives, and a load-bearing member that is operably connected to the drives; wherein the drives are arranged so that they can be operated in a forwards direction in order to move the load-bearing member towards the front of the trailer and so that they can then be operated in the reverse manner so as to move the toad-bearing member towards the rear of the trailer; characterised in that the first trailer comprises a retaining means arranged so that it can be moved over the engaging means and/or over a drawbar of the second trailer, so as to prevent the engaging means becoming accidentally disengaged when the trailer is in use.

Preferably the pressure exerted on the ground by the first trailer with the second trailer loaded thereon is less than the pressure that would be exerted on the ground by the second trailer alone (prior to loading it onto the first trailer).

Desirably this is achieved by providing the first trailer with one or more endless tracks.

The term "endless track" is used herein to include any endless ground-contacting system upon which a plurality of internal wheels can be run without the wheels contacting the ground directly. Thus it is used to cover endless belts, chains, caterpillar tracks, etc.

The pressure exerted by the first trailer with the second trailer mounted thereupon will be the force applied due to the combined weight of the two trailers divided by the ground area that the endless tracks are in contact with. Endless tracks have a relatively large ground-contacting surface area and thereby provide a convenient way of allowing the combined weight of the trailers to be distributed over a relatively large area so the pressure exerted at on the ground can be reduced.

Although it is preferred for the first trailer to have endless tracks, this is not essential. For example, the first trailer may be provided with more wheels than the second trailer, the wheels may be larger, and/or the wheels may be wider. All of these approaches help to reduce pressure.

Many other alternatives are also possible. Thus, for example the first trailer may be provided with one or more rollers to allow improved weight distribution and to reduce the pressure applied to the ground. These may extend across the full width of the trailer or across a substantial part thereof.

The trailer may even be provided with skis or other low friction sliding supports that allow the trailer to be slid over soft ground.

The precise nature of the ground-contacting parts of the first trailer is not crucial, but it is desirable that they help in reducing the pressure applied to the ground (relative to the pressure that would be applied by the second trailer alone when not mounted on the first trailer).

It is not even essential for ground-contacting parts to be present when the first trailer is in use. In one embodiment of the present invention the first trailer may function as a hovercraft. Thus it may have no ground-contacting parts at all. It may be provided with a skirt and one or more fans for providing a downwards thrust. This embodiment of the present invention is useful for particularly wet ground. It can still be coupled to a tractor or other motor vehicle for steering/providing power etc, but the load pulled by the tractor can be considerably reduced.

It is however preferred that for most embodiments of this aspect of the invention that the trailer has one or more ground-contacting parts that assist in reducing the pressure exerted on the ground (e.g. endless tracks).

Two drives are present for moving the load-bearing member. In order to maximise the space available for loading it is preferred that the drives are located at opposite sides of the trailer or at least close to the sides (e.g. less than 50 cm from the sides) so as to leave all or the majority of the platform available for loading. This is an important advantage over many may prior art based systems where a single, centrally located drive is used. This embodiment of the present invention is also advantageous in that it allows very large loads to be loaded or unloaded.

Desirably the drives will be provided with some form of housing, rails or other protective guarding for safety reasons. Advantageously, protective guarding for the drives is incorporated into raised sides of the trailer. An alarm and/or a safety cut-off system may be provided if external components become accidentally lodged in the drives.

The term "drive" is used herein to indicate any appropriate system for that is operably connected to a part of the load-bearing member so as to allow it to move it forwards or rearwards. Preferably each of a plurality of drives is preferably operably connected to a different part of the load-bearing member. Thus, for example, if two drives are present they are desirably located at or close to opposite ends of the load-bearing member.

The plurality of drives are preferably symmetrically arranged about a longitudinal axis running through the platform of the trailer.

It is important to note that there is no requirement that the drives be independent. Indeed for simplicity it is preferred that the plurality of drives are operably connected and are driven at substantially the same speed. For example the drives may be operably connected to a common axle may be connected to the axle by sprockets/cogs/belts etc. A single motor, power source or other drive system may be used to drive them.

Less preferably the drives may be independently operable. They may for example be provided with separate power sources (e.g. separate motors). They may then be provided with controls allowing their speeds to be adjusted. The controls may facilitate fine adjustment. Thus they may allow the speed of the drives to be synchronized so that they run at substantially the same speed. This may be aided by computer control/gears etc. However the provision of independent drives is less preferred because it can add to the expense of the system. It is also sometimes difficult to achieve accurate synchronization, especially if the drives are operated by an inexperienced operator.

The drives can be driven by of any appropriate design. For example they may be winch-, ratchet-, pulley-, belt-, piston- cable- or chain-drives. Preferably the drives are endless. They may be run on any appropriate rotatable members, e.g. sprockets wheels and/or bearings.

The first trailer may be provided with its own power source (e.g. an electric battery or a motor). However, more preferably, power is obtained from a vehicle to which the first trailer is attached. For example, power may be provided by the vehicle's hydraulic system and/or electrical system.

Desirably the drives of the trailer can be controlled by a driver of said vehicle without the need for the driver to leave the vehicle.

Farm vehicles, such as tractors, are frequently provided with hydraulic systems that are intended to drive a wide range of machinery. Such a hydraulic system can advantageously be connected to and used to operate a trailer of the present invention. For example it may be used to operate the drives for loading/unloading a trailer and it may be used to control pivoting of the trailer platform.

The endless tracks (or other ground-contacting members) of the trailer can be powered, if desired, and this may be useful if additional traction is desired. However in many cases this will not necessary and can therefore be avoided to reduce manufacturing costs.

Preferably the platform of the first trailer is mounted so that it can be pivoted from a position suitable for transportation to a more inclined position suitable as a ramp for loading or unloading the second trailer.

Desirably the platform is pivotally mounted to an axle of the trailer, although it is also possible to mount it to the chassis, for example.

The ground-contacting parts of the trailer (e.g. endless tracks) are desirably mounted upon this axle. The first position is preferably a generally horizontal position, or is at least less inclined than the second position.

Any appropriate means can be used to move/pivot the platform. This may for example be achieved by using a manually operated lever. Preferably, however, automated means are used. For example, one or more extendable hydraulic arms may be actuated.

Conveniently, one hydraulic arm is located at each side of the trailer, with one end of each arm being operably connected to the platform and the other one end being operably connected to a mounting for the axle. When the arms are hydraulically extended they cause pivoting of the platform about the axle so that the front of the trailer rises and the rear lowers towards ground level.

An automatic stop may be provided that is actuated once a certain angle of pivot has been reached at which the rear of the platform is at or close to ground level. This can be a useful feature in preventing damage to the rear of the platform.

An alternative is to provide one or more hydraulic arms (or other extendable members) elsewhere on the trailer. For example they may be provided at or close to the front of the trailer and may function to lift the front of the trailer whilst the platform pivots about the axle and the rear of the trailer is lowered towards the ground. Many dumper trucks have hydraulic arms that function in a similar manner.

Less preferably, the platform is not pivotally mounted but is fixed (e.g. in a substantially horizontal position) and a ramp to the platform is provided. For example, the ramp may be pivotally mounted to the rear of the platform so that it can be dropped or lowered down towards the ground when needed and stowed away when not in use. It may be stowed under the platform and a catch or lock may be provided to hold it in place until needed.

As a further alternative, a separate ramp may be provided and moved into position when needed. If desired the ramp may be releasably secured to the trailer when in use. Here the trailer may be provided with engaging means to engage the ramp and prevent it from slipping when in use. For example, one or more slots, bolts or catches may be used.

A still further alternative is for the platform to be in a fixed position so that its rear is already close to ground level. It may therefore be fixed at an inclined position so that it already acts as a ramp without the need for pivoting. This alternative is however less preferred because ground clearance may be low when the trailer is used for transportation. (This may cause difficulties if the trailer is used over uneven ground.)

It is therefore most preferred that the platform is itself pivotally mounted, as aforesaid.

Turning now to the load-bearing member, as discussed above this is operably connected to a plurality of drives (preferably two drives). It is preferably a rigid member and may for example be formed of a resilient metal such as steel. It can be in any appropriate form but is preferably a cross member set at right angles to the drives and remains so whilst it is being operated. This helps in the even distribution of forces.

The load-bearing member may, for example, be in the form of an elongate member, such as a rod, ' beam or girder. It may be connected to the drives by any appropriate securing means so that it moves forwardly or rearwardly as the drives are operated forwardly or in reverse. Preferably however the securing means can be readily removed to allow maintenance/repair. For example, removable bolts, screws, catches or locks may be used, hooks and eyes may be used, etc.

The load-bearing member may run along one or more tracks. Although this is not essential, it can help in reducing friction and/or in providing a smooth operation. For example bearings may be provided in the tracks and may help to support the load-bearing member. As an alternative to bearings, other rotatable members may of course be used (e.g. wheels, bearings, castors, cogs or rollers), or low friction slidable mountings may be used.

The tracks may advantageously be provided at or close to the sides of the trailer. Desirably they run along a substantial part of the trailer. For example they may run for a distance that is at least 50%, at least 70%, at least 90%, of the length of the platform. Preferably they run for the full length or for a majority of the length of the platform. They may be incorporated within safety guards. The safety guards may also protect the drives, as discussed previously. Preferably a safety guard is provided at each side of the trailer to protect an endless drive (e.g. an endless chain) and a track along which the load-bearing member runs.

The load-bearing member desirably includes the engaging means for releasably engaging the second trailer. The engaging means can be in any appropriate form, as will be determined by the part of the second trailer that it engages. For example, if it engages an eye present at the end of the second trailer then the engaging means may be in the form of a hook, bolt, catch or protruding member that fits into the eye (or *vice-versa*)*.* It may be welded, bolted or otherwise secured in place. Alternatively it may be integral. Desirably it is located at a substantially central position along the load-bearing member.

There are of course many other possibilities and all are within the scope of the present invention provided that they allow the first and second trailers to be engaged in a manner so that the second trailer can be loaded onto the first trailer when the drives are operated. Preferably the engaging means is a male or female member that engages a complementary member present on a drawbar of the second trailer. (The term "drawbar" is used broadly herein to cover any elongate arrangement that can be connected to a vehicle in order that a trailer or other movable system can be towed by the vehicle.)

The retaining means is provided to prevent accidental disengagement of the engaging means from the second trailer.

It is arranged so that it can be moved over the engaging means and/or over a drawbar of the second trailer into a position preventing accidental disengagement.

Like the load-bearing member, it may conveniently also be operated by the drives, as discussed later, and may also be in the form of an elongate member.

The retaining member may contact the engaging means or the drawbar so as to prevent accidental disengagement hut this is not essential. Indeed a small spacing may sometimes be preferred in order to reduce the risk of abrasion. However the spacing should not be large enough to allow accidental disengagement to occur.

Forward and rearward gears may be provided to operate the drives. Conveniently these arc operable from the vehicle used to tow the trailer, so that a driver of the vehicle can conveniently change the gears without having to leave the vehicle.

Desirably a stop is provided that prevents the load-bearing member from pulling the second trailer onto the platform of the first trailer beyond a given point (in order to prevent damage). This may be electrical or mechanical. For example it may be a switch that switches off power to the drives at a certain point. Alternatively it may be a deformable member (e.g. a pad, cushion, buffer or spring) that cushions impact.

Similarly, a stop may be provided to prevent the load-bearing member moving rearwardly beyond a certain point. This is useful during unloading. The stop may, for example, be set to operate at a point when the load-bearing member has been used to move the second trailer to a point when it is dear of the platform of the first trailer. The first and second trailers can then be conveniently disengaged from one another by unhitching the engaging means.

Once the first and second trailers have been disengaged the first trailer can be driven off for further (e.g. for loading further trailers). If, the platform is pivotally mounted, prior to being driven away it may be pivoted upwards (e.g. by using the hydraulic arms) so as to increase ground clearance. It may be pivoted to a substantially horizontal position. However this is not essential, because it may be pivoted to a lesser degree, or, if there is already sufficient ground clearance, pivoting sometimes may not be necessary. (Indeed, as discussed previously, in some embodiments the platform need not be pivotally mounted, although this is preferred.)

It is important to note that it is only necessary to supply one trailer of the present invention (referred to herein as the "first trailer" for convenience) and this can be used as a shuttle to move many standard trailers ("second trailers") in turn from a first to a second location - e.g. from relatively soft ground to harder ground. This can result in considerable savings compared to the cost of modifying many trailers.

A trailer of the present invention can of course be as large or small as desired. This will largely depend upon the size of the trailer that it is intended to transport.

Preferably a trailer of the present invention is wide enough to transport a trailer that is at least 1 metre wide (measured across its maximum width). More preferably it is wide enough to transport a trailer that is at least 2 metres wide, or at least 3 metres wide.

In one variant the width of a trailer of the present invention is adjustable. In some circumstances it may be desirable for the trailer to be relatively wide (e.g. where it is desired to transport wide loads). In other circumstances (e.g. for use on narrow roads, for other areas where it is difficult to manoeuvre, or for storing the trailer) it may be desirable to have a trailer that is relatively narrow.

By providing a trailer with an adjustable width, a single trailer can be used in all of these circumstances.

Various ways of achieving an adjustable width are within the scope of this aspect of the present invention.

One or more parts of the trailer platform may be movable relative to other parts in order to reduce/increase width, as appropriate.

For example, one or more parts of the trailer platform may be arranged so that they can be moved over/under/into other parts in order to reduce width, but can then be moved back towards their original position so as to increase width. (Such arrangements are well known for example in order to increase/reduce the size of adjustable table tops.) Possibilities include telescopic arrangements, concertina arrangements, slidable arrangements, stowable arrangements, etc.

In one embodiment a central part of the platform is kept stationary and side portions are movably mounted so that they can be moved inwards to reduce width or outwards to return to the original width. However other arrangements are possible.

The platform may be mounted upon an axle that is also adjustable in width (e.g. by a telescopic arrangement). This allows the distance between the endless tracks or other supports for the platform to be varied, if necessary. In a less preferred embodiment a set of axles of different widths may be provided so that one width of axle can be replaced with another when desired. A quick release mounting may be provided to facilitate this, if desired.

In a further embodiment the axle and endless tracks (or other supports) may be mounted underneath the platform and the outer edges of the endless tracks (or other supports) may be positioned at some distance inwards of the outer edges of the platform (when the platform is at its maximum width).

In this embodiment the axle is not the limiting factor, because reducing the width of the platform reduces the width of the trailer from its maximum width. Thus a fixed axle can be used. (It is not necessary to reduce the width of the axle/to replace the axle with a shorter axle in this embodiment.)

If a trailer of adjustable width is provided, it is preferred that a driver of the vehicle that tows the trailer can adjust the width whilst operating the vehicle. For example a hydraulic system may be operated to increase/reduce the width as desired.

Using such a system, one or more telescopic hydraulic arms may be retracted/extended so as to decrease/increase the width of the trailer as desired. Preferably at least two such arms are provided. The ends of the arms may be operably connected with the sides of the trailer so as to pull the sides inwardly/push them outwardly as desired.

It is preferred that the width of the trailer is adjustable (by whatever means) so that it can be reduced by at least 10%, at least 20% or at least 30% from its maximum width. In some embodiments reductions of at least 40%, or at least 50% in width are possible.

Turning now to the length of the trailer of the present invention, desirably the platform is long enough to transport a trailer that is at least 2 metres long in total. More preferably it is long enough to transport a trailer that is at least 5 metres long, or at least 7 metres long.

As with the width, it is possible for the length to be adjustable. For example the trailer may have a portion of its platform that can be extended/moved in a length-wise direction so as to accommodate elongate loads if necessary. Thus it may be possible to vary the length by at least 10%, at least 20%, at least 30%, at least 40%, or at least 50% in some embodiments

If very large trailers are to be transported then the trailer of the present invention can be provided with additional means for distributing weight. For example further, longer or wider endless tracks may be provided. A combination of endless tracks and separate wheels may even be used, although this is less preferred.

As indicated previously, it is preferred that a trailer of the present invention is towed by another vehicle, e.g. a farm vehicle such as a tractor. Thus the trailer of the present invention desirably has engaging means that allows it to releasably engaged to the vehicle. Any appropriate engaging means can be used, as is well known in the art. Thus, for example, a standard connection for connecting trailer drawbars to tractors may be used.

The trailer may also be adapted for connection to the electrical and/or hydraulic system of the vehicle. Thus one or more electrical and/or hydraulic connectors may be provided, as is well known in the art of farm machinery.

In addition to the trailer itself, the present invention also includes the combination of the trailer with another trailer supported thereon. Thus the combination of the first and second trailers is covered.

The present invention further comprises the combination of the first trailer (optionally with the second trailer supported thereon) and a motor vehicle to which the first trailer is connected.

The motor vehicle is preferably a farm vehicle. More preferably it is a tractor. The tractor can be a standard tractor. Alternatively the tractor may be provided with extra large wheels, with endless tracks, or other means for distributing load or improving traction.

In addition to the aspects of the invention described above, various methods are also within the scope of the invention.

Thus the present invention includes a method whereby a trailer of the present invention is used to load a second trailer thereupon.

Preferably the method is performed on a farm. Thus farm produce may be loaded onto the second trailer. Desirably this is done once the second trailer has been loaded onto the first trailer. It may be done whilst the trailers are being transported by a vehicle, such as a tractor, that is attached to the first trailer. Thus farm produce may be loaded whilst the trailers are in motion.

For example, a harvester may be run alongside the first trailer with the second trailer thereon and be used to deposit farm produce onto the second trailer. The second trailer may carry one or more containers into which the farm produce is loaded. However this is not essential, especially if the trailer has enclosed sides/ends to prevent produce falling off it.

The harvester may, for example, be a combine harvester. It may include a chute or conveyor that can be positioned over the second trailer or over a container carried by the second trailer so as to deposit farm produce as desired.

Alternatively, farm produce may be manually loaded onto the second trailer. For example farm produce may be cut (or otherwise harvested) and placed in crates or other containers along a field. A tractor pulling the first trailer, with the second trailer loaded thereon may then be slowly run alongside the filled containers so that they can be conveniently be loaded onto the second trailer by farm workers.

There are different many ways in which a trailer of the present invention can be used. As indicated above it is preferably used for farming purposes. However this is not essential. It can be used for any other purpose.

Indeed it is not even limited to transporting trailers. For example, it can be used to rescue a stranded vehicle. A vehicle may become stuck if overloaded, or if used on soft ground. It may simply be broken down. Such a vehicle can be conveniently pulled onto a trailer of the present invention using the pulling means and the trailer with the vehicle loaded thereon can then be towed away to a convenient location, where it can be unloaded.

The present invention is also useful on regions of sand, shale or mud. Tractors and trailers are often used by fishermen to transport equipment or catches over such areas, but there is a risk that conventional trailers can become stuck. Thus the present invention provides a useful alternative, whereby a standard trailer containing any desired load can be carried by a trailer of the present invention so as to reduce pressure on the ground. It is particularly useful in the cockling and shrimping industries. In these industries tractors and trailers are often used at low tide over very soft ground.

A further useful application of the present invention is that of loading / unloading boats. Boats are often carried by trailers but these can be difficult to manouvre especially over soft ground and may themselves become stuck. A trailer of the present invention therefore provides a useful way of transporting boats.

As indicated earlier, a trailer of the present invention is useful in transporting farm animals. However it may also be used to transport other animals. For example, it can be used to transport race horses on race courses (e.g. to stable or paddock areas). The conditions of race courses can vary significantly and, as indicated earlier, the present invention is particularly useful over soft ground. Similarly the fields in which the horses are normally kept may be on soft ground soft, so that there is again a risk of a conventional horse trailer becoming stuck. A conventional horse trailer can therefore be conveniently transported using a trailer of the present invention.

A still further application of the present invention is in transportation over snow or ice. Conventional trailers may become stuck under such conditions or may be dangerous to use (e.g. because of skidding). A conventional trailer or another load (e.g. a vehicle) can be pulled onto a trailer of the present invention so as to reduce such risks. This application of the present invention is particularly useful for extreme conditions, on mountainous ground or in polar/sub-polar regions. If desired snow chains/spikes or other means may be used to provide improved traction conditions. However in most cases endless tracks will be effective.

The present invention has an almost infinite number of applications. It can be used for any application where a conventional trailer is used (as well as for many other applications). Conventional trailers can be used to transport a wide range of produce, animals, machinery, vehicles etc. Given that such trailers can be conveniently loaded and unloaded onto a trailer of the present invention, a trailer of the present invention can of course be used for the same purposes. The present invention allows another trailer to be transported in "piggy back" fashion and reduces the risks that might otherwise be associated with the conventional trailer being moved over certain ground conditions.

As indicated earlier, the present invention is particularly useful for reducing ground compaction and /or for reducing the risk that a conventional trailer might become stuck.

In a preferred embodiment of the present invention the underside of the platform is shaped so that it can slide over ground when the trailer is moved (after the platform has been pivoted to lower its rear end towards ground level). Thus the platform can act as a sledge to further assist in weight distribution. This is also convenient because it means that the platform does not need to be raised whilst it is used over soft ground.

The platform may therefore have a lower surface that is angled relative to the upper surface over at least part of its length. Thus when the platform is pivoted towards ground level the angled lower surface moves to a position at which it is adjacent to and in contact with the ground. This aids in reducing pressure by increasing the ground-contacting area. Preferably the angled lower surface is substantially smooth. It may be formed of a low friction material or may have a low friction coating if desired. Other alternatives are however possible. For example skis, wheels, rollers or even additional endless tracks may be present underneath the platform.

Also disclosed herein are suspension systems for vehicles having endless tracks. These can be used with any such vehicles and are not limited to the trailers as described above.

Such a suspension system comprises a housing, a plurality of deformable members located within the housing and a relatively rigid member that is also located within the housing and is in contact with the deformable members; wherein the housing is operably connected to one or more wheels that contact the inside of the endless track and the housing is capable of distorting when said one or more wheels moves over an obstacle, thereby causing deformation of the deformable members; and wherein the deformable members and housing are resilient so that they can return to their previous shape once said one or more wheels have passed over the obstacle.

The housing preferably has a generally polygonal cross section (e.g. in the form of a generally triangular or generally quadrilateral frame). Preferably it has a generally square cross-section.

The relatively rigid member preferably also has a generally polygonal cross-section.

Desirably the plurality of deformable members are generally cylindrical in cross section, although they can have any regular cross-section. Thus they are preferably in the form of cylindrical rods.

The suspension system can be used to provide a very smooth ride even over rough terrain. It does not require springs or hydraulic systems and is easy to maintain.

A system for maintaining tension of an endless track can be used with a trailer of the present invention; wherein the system comprises a pivotally mounted arm that is operably connected at one end to an axle upon which one or more outer wheels are mounted; wherein the arm exerts a force on the axle so that said one or more outer wheels are urged against the track.

Preferably the pivotally mounted arm is operably connected at its other end to an elongate member via a flexible housing; wherein the housing contains a plurality of deformable members and a more rigid member that is in contact with the resiliently deformable members. The housing and deformable members are therefore analogous to those described above for the suspension system.

Desirably the arm is adjustable so that the tension of the endless track can be increased or decreased. Adjustment may, for example, be achieved by increasing or reducing the length of the arm.

Thus a convenient system is provided for adjusting the tension of an endless track.

Having described various aspects of the present invention in general terms, they will now be described by way of example only, with reference to the accompanying non-limiting drawings and examples, wherein:
Figure 1 is a perspective view of a trailer of the present invention (referred to herein as the first trailer) when viewed from above and to the right hand side. In this view an engaging means is show in position at the rear of the trailer ready to engage a drawbar of a standard trailer.
Figure 2 is an expanded view of the engaging means that is shown in Figure 1 and that is circled in said figure.
Figure 3 is an expanded view of covered part of the first trailer that is circled in Figure 1, but with the cover removed so as to expose a drive system.
Figure 4 is an expanded view of a part of the first trailer that is circled in Figure 1 showing wheels that run on side rails of the trailer.
Figure 5 shows the trailer that is shown in Figure 1 when the engaging means has been moved to a forward position on the trailer.
Figure 6 shows a modified version of the trailer that is shown in Figures 1 to 5 when coupled to a tractor. The modified version has an improved suspension system
Figure 7 shows an enlarged partial view of an improved suspension system suitable for use with a trailer of the present invention.
Figure 8 shows a unit comprising an endless track that incorporates an improved suspension system. This is shown prior to attachment to an axle of a trailer.
Figure 9 shows an enlarged partial view of the left hand part of the assembly shown in Figure 8 but with an outer facing wheel removed.

### Example 1

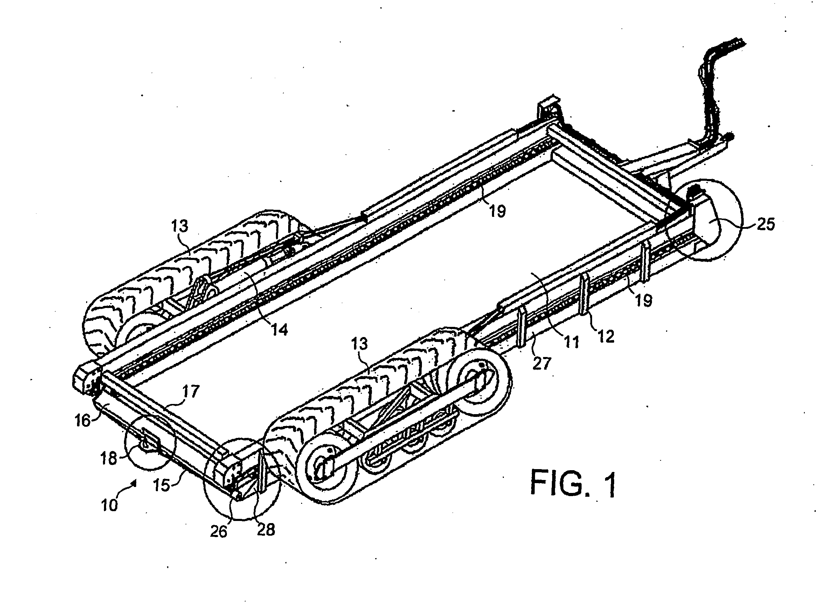

### Trailer shown in Figures 1 to 5

Turning now to Figure 1, trailer 10 comprises an elongate platform 11, a metal frame 12 and caterpillar tracks 13. The platform 11 is pivotally mounted upon an axle (not shown) that is positioned underneath the platform 11 and is located between the two sets of caterpillar tracks 13.

The trailer 10 also has two hydraulic arms 14; one being provided on each side of the trailer 10. (In the view shown in Figure 1 only the left hand hydraulic arm is visible, but a right hand hydraulic arm is also present.)

Each arm 14 is connected at one end to the frame 12 of the trailer 10 and at the other end to a mounting for the caterpillar tracks 13. In the position shown in Figure 1 the hydraulic arms 14 have already been extended. Extension of the arms 14 causes the platform 11 to pivot about the axle so that the rear 15 of the trailer 10 pivots to a position that is at or close to ground level. This is the position that is shown in Figure 1. It serves as a useful ramp.

The platform 11 can have an angled underside (not shown). It may be therefore be generally wedge or sledge shaped in longitudinal cross section towards its rear. This can be useful whilst it is being used as a ramp. This is not however essential. The platform 11 may, for example, have wheels (not shown) or other supports underneath it, to support it when it is lowered towards ground level. Of course if the platform 11 is strong enough then no supports may be needed.

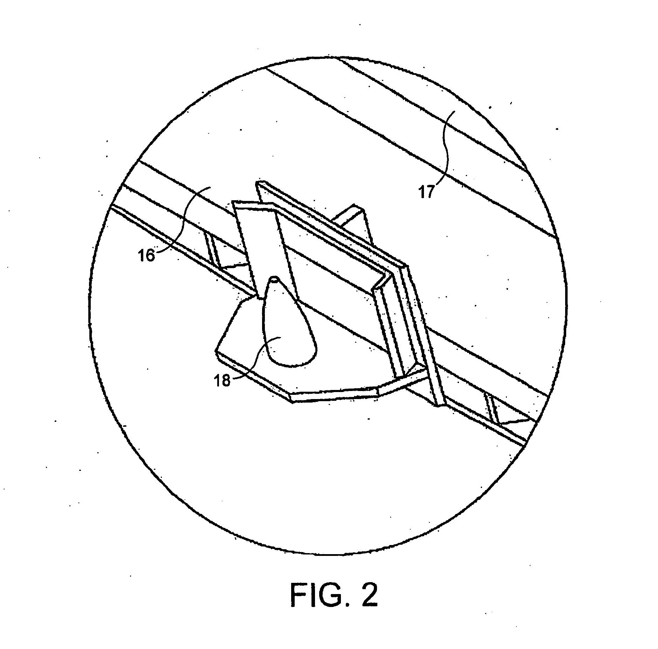

The trailer 10 comprises first and second cross members 16 and 17. The first cross member 16 carries a generally conical member 18. This is shaped to fit into a corresponding aperture present at the end of a drawbar of a second trailer (not shown in Figure 1). The conical member 18 can best be seen in Figure 2 and allows engagement of the first trailer with the second trailer.

The first and second cross members 16 and 17 are operably connected to side chains 19, which are located to each side of the platform 11. With the exception of the connections to the cross members 16 and 17, the side chains 19 are endless. They are driven hydraulically.

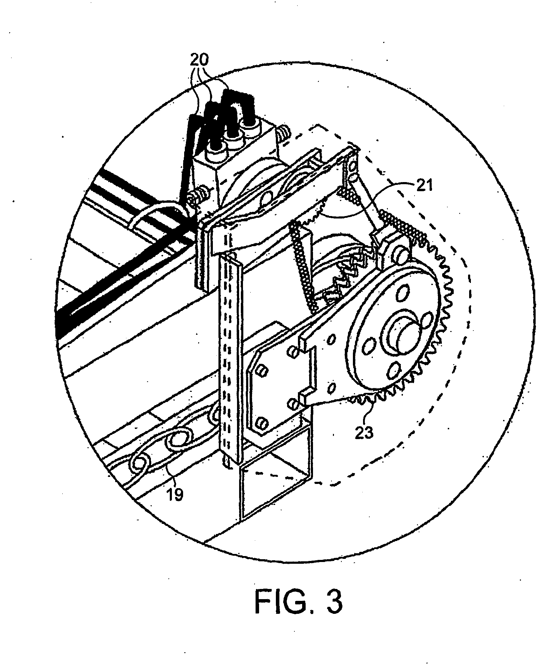

As can be seen from Figure 3, a hydraulic system 20 drives an upper sprocket 21 located at each side of the front of the trailer 10. The upper sprocket 21 is connected by a small chain 22 to a lower sprocket 23. The lower sprocket 23 drives a shaft upon which a sprocket 24 for the side chain 19 lies. (A further sprocket for the side chain 19 is located towards the rear of the trailer 10 so that the chain can be held under tension between the two side chain sprockets.)

Of course for safety reasons the drive system shown in Figure 3 would normally not be exposed when the trailer 10 is in use, but would be behind the protective cover 25 that is shown in Figure 1.

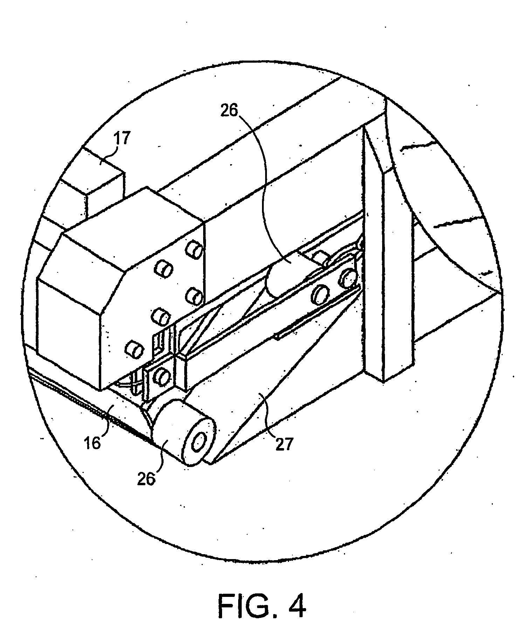

As can be seen from Figure 4, the first and second cross members 16 and 17 are supported by wheels 26. The wheels 26 run on rails 27 that are part of the frame 12. The wheels 26 and rails 27 help in directing the cross members 16 and 17 whilst they are being pulled by the side chains 19 19. They also prevent undue sagging of these chains 19.

Towards the rear of the trailer 10 the rails 27 are downwardly angled over a short distance. When the wheels run down this part 28 of the rails the first cross-member 16 pivots relative to the second cross member 17. This exposes the conical member 18 so that it is in a convenient position for engaging the drawbar of the second trailer (see Figure 1 and Figure 2). The trailers can be engaged manually once the first trailer 10 is positioned close to the second trailer, with the conical member 18 close to a corresponding aperture provided in the drawbar of the second trailer.

When the first 10 and second trailers are so engaged, the side chains 19 can be operated in the opposite direction to the direction that was previously used to move the cross members 16 and 17 to the rear of the first trailer 10. The second trailer is then pulled onto the platform 11. During this operation the wheels 26 that run along the rails 27 run initially up the downwardly angled part of the rails 28. Thus the pivoting action described above for the first cross member 16 relative to the second cross member 17 is reversed.

This causes part of the drawbar of the second trailer (which is engaged by the conical member 18) to move underneath the second cross member 17 and into a position that physically prevents the drawbar from disengaging the conical member 18. The second cross member may be in contact with the drawbar / conical member 18. However this is not essential, because if there is only a small gap present between the drawbar / conical member 18 and the bottom of the second cross member 17 this will not allow sufficient room for disengagement.

As the second trailer is pulled further onto the first trailer 10 by the action of the side chains 19, the rail contacting wheels move off the downwardly angled part of the rails 28 and onto the remainder of the rails 29, with the first and second cross-members 16 and 17 cooperating to prevent accidental disengagement of the second trailer from the first trailer 10, as described above.

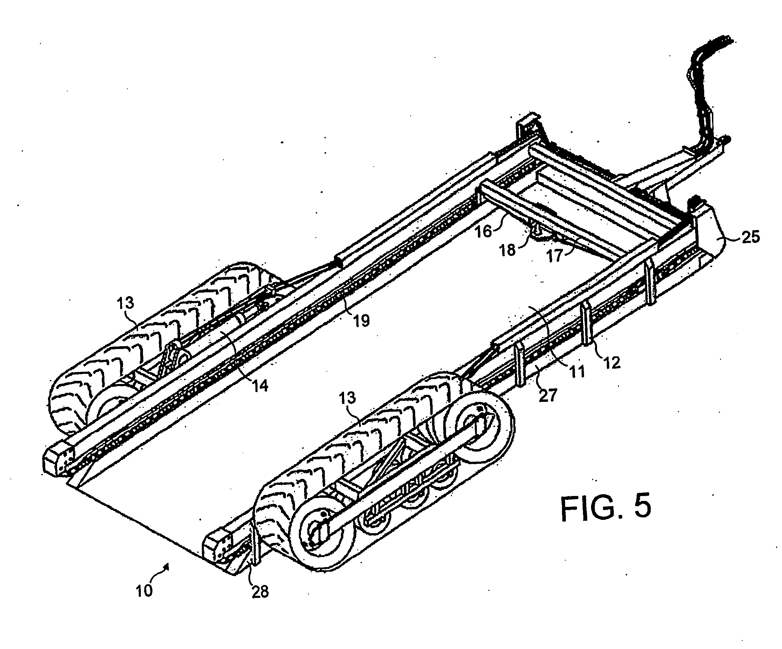

This can be seen in Figure 5, which shows the first and second cross-members 16 and 17 when they have most of the distance to the front of the first trailer 10 and there is only a short distance remaining. An automatic stop prevents the cross-members 16 and 17 from damaging the front of the trailer 10. This may, for example, be a switch that is triggered when the cross-members 16 and 17 have moved a certain distance and which functions to stop the side chains 19 from moving. The second trailer will then be in position so that it is fully loaded onto the first trailer 10.

When the second trailer is in this position the hydraulic arms 14 can be retracted, causing the platform 11 of the first trailer 10 to pivot to a generally horizontal position. The first trailer 10 can then be towed away by a tractor with the second trailer loaded on the platform 11.

The second trailer may already have a load upon it (e.g. farm produce or animals) when it is moved onto the first trailer. Alternatively it may be loaded once it has first been moved onto the first trailer 11. As described previously it may be loaded manually or by machine (e.g. by a harvesting machine). It may be loaded when stationary or when being pulled by the tractor.

Both trailers (together with any load) can then be transported to a convenient location at which the second trailer can be unloaded from the first trailer 10. Unloading is achieved by reversing the operation described above.

Thus, during unloading, the hydraulic arms 14 are extended to pivot the platform 11 so that it slopes downwardly until its rear is at/close to ground level. The side chains 19 are then operated in the reverse direction to that used for loading the second trailer. This moves the first and second cross members 16 and 17 towards the rear of the first trailer 10, with the second trailer engaged to the conical member 18. As the wheels 26 move down onto the angled part of the rails 28, the first and second cross members 16 and 17 pivot relative to one another so that the second cross member 17 no longer physically prevents the first 10 and second trailers from being disengaged. The second trailer can then be disengaged from the first trailer unhitched by lifting its drawbar off the conical member 18.

During the operation described above an automatic stop can be provided to prevent the first and second cross members 16 and 17 moving beyond a certain distance when the second trailer is lowered towards ground level. A brake may also be provided and may be set to operate automatically if the side chains 19 operate above a certain speed.

Once the second trailer has been unhitched, the first trailer 10 can be towed away by the tractor to be used to load and unload further trailers. The rear of the platform 11 can be raised again by using the hydraulic arms 14 to pivot the platform 11 before driving the tractor off to load further trailers. However it need not be raised completely to a horizontal position. It only need be raised sufficiently to obtain adequate ground clearance. Indeed if the platform 11 is not in contact with the ground and there is already sufficient ground clearance to prevent it being damaged when towed by the tractor then it need not be raised at all. In most cases, however, it is likely that the lower end of the platform 11 will be raised after a first trailer has been unloaded, prior to driving the tractor off to load further trailers onto the first trailer 10.

A single first trailer 10 can be used to load and unload many standard trailers over the course of a working day. It can be used over most soil conditions and can significantly reduce ground compaction relative to standard trailers. The trailer 10 is particularly effective when used in combination with a tractor that also has caterpillar tracks. However it can also be used with tractors having standard wheels, because it is generally the trailer rather then the tractor that is most at risk from becoming stuck in soft ground. The trailer 10 of the present invention significantly reduces this risk.

It should be appreciated that although the invention has been described with reference to a trailer that can be connected to a tractor or other vehicle, the features of the trailer can be integrated into a motor vehicle. Thus it is not essential to provide a separate towing vehicle and trailer. A motor vehicle including the features of a trailer of the present invention therefore represents a further aspect of the present invention and can be used for the same purposes as the trailer present invention. Of course if a unitary vehicle is provided then there is no need to provide it with means for connecting it to a tractor or other towing vehicle.

### Example 2

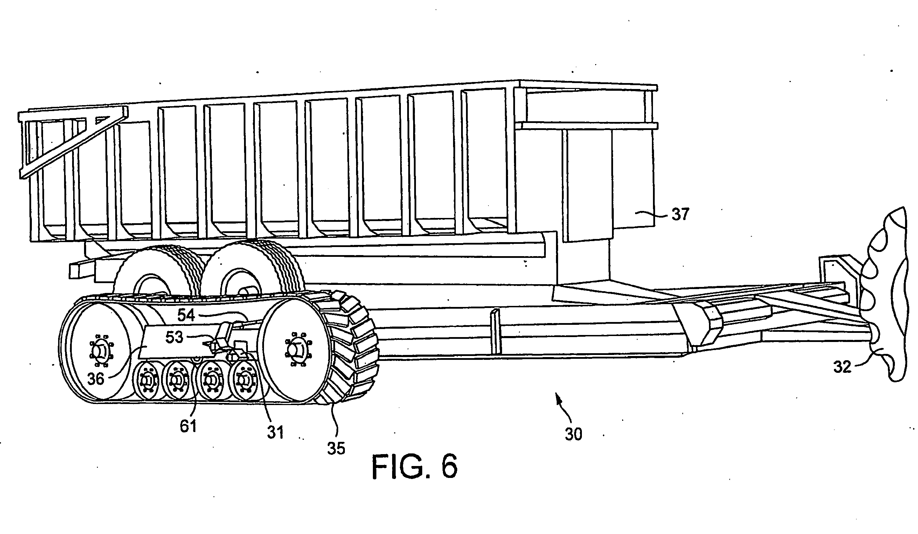

### Improved trailer / suspension system, as shown in Figures 6 to 9

Figure 6 shows a modified version 30 of the trailer 10 that is shown in Figures 1 to 5, coupled to a tractor 32.

The modified trailer 30 has an improved suspension system. A housing 31 that forms part of the suspension system is shown, as is another housing 53 that is linked to a telescopic rod 54 and can be used for increasing or reducing the tension of the endless track 35 upon which the trailer 30 runs. A protective cover 36 is also shown that provides a degree of protection against mud or debris.

Figure 6 also shows a second trailer 37 is shown that has been mounted onto the first trailer 30 via a method corresponding to that described earlier in Example 1.

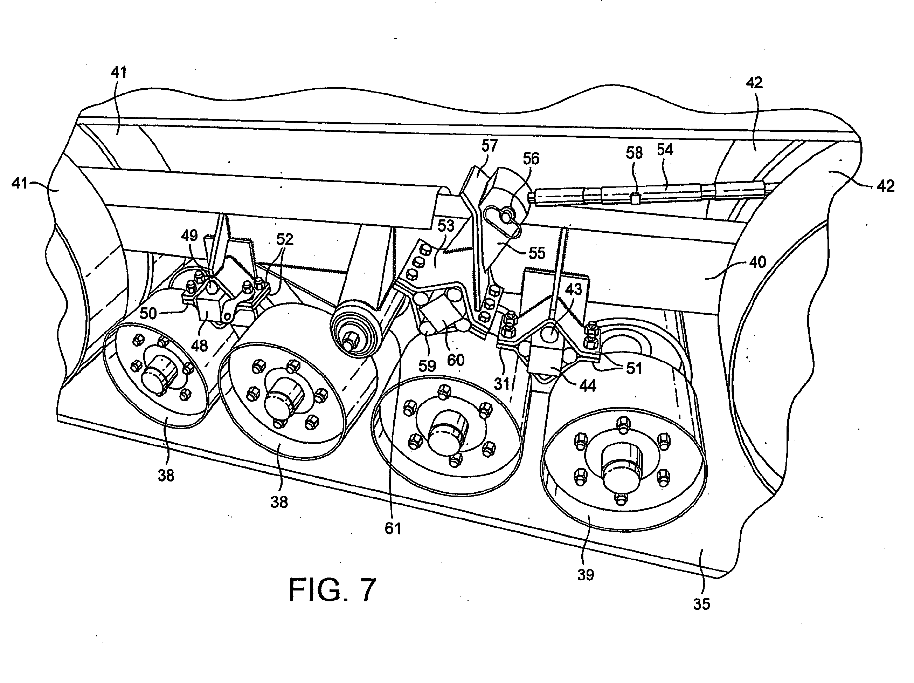

An enlarged view of a suspension system is shown in Figure 7. This is very similar to the system illustrated in Figure 6, but provides a clearer view, with a cover removed.

Figure 7 shows two suspension housings 31, 50 that are each operably connected to a pair of small wheels 38, 39 mounted to run underneath the housings 31, 50 on the inside of the endless track 35. The two suspension housings 31, 50 are attached to a longitudinal shaft 40 that interconnects large outer wheels 41, 42. Two corresponding suspension housings (not visible in this view) are also present on the other side of the longitudinal shaft and are each attached to two other pairs of small wheels.

A plurality of deformable members 43, 49 are located within each suspension housing 31, 50. A relatively rigid member 44, 48 is also located in the housing 31, 50 and is in contact with the resiliently deformable members 43, 49.

Each suspension housing 31, 50 is capable of distorting to a limited degree when the track 35 and associated wheels 38, 39 move over an obstacle (e.g. a small boulder or rock). The distortion off the suspension housing 31, 50 causes increased deformation of the deformable members 43, 49 within the housing 31, 50. The deformable members 43, 49 are positioned between the housing 31, 50 and the more rigid member 44, 48. They bear against the inside of the housing and the outside of the rigid member 44, 48. They exert a return force back against the housing 31, 50 that assists in causing the housing 31, 50 to return to its original shape once the wheels 38, 39 have passed over the obstacle. The housing 31, 50 and the deformable members 43, 49 are resiliently deformable. Thus they can deform and return to their original shapes very many times before being worn out/needing replacement. Typically the housing 31, 50 is formed of a resilient metal and the deformable members 43, 49 are formed of an elastomeric substance, such a silicone rubber.

In the embodiment shown on Figure 7 the housing 31, 50 is in the form of two generally "V" shaped brackets 51, 52 that have been bolted to one another to define a generally square internal frame. The rigid member 44, 48 is located at a generally central position within the frame and has a generally square cross-section. It is offset from the square shape of the frame by approximately 90°. The rigid member 44, 48 and frame thereby together define four inner chambers that are approximately triangular in section (roughly equilateral triangles) and that house the deformable members 43, 49. In the embodiment shown the deformable members 43, 49 are in the form of generally cylindrical rods that lie parallel to one another within the chambers. They are tightly fitted in the chambers.

The combination of the flexible housing 31, 50, the resilient members within it 43, 49 and the rigid member 44, 48 provides a very efficient system that does not require springs or coils. It allows different pairs of wheels 38, 39 to move with a significant degree of independence of one another. Indeed even wheels attached to the same suspension housing 31, 50 have a limited degree of independent movement in horizontal and vertical directions.

It is particularly important for a suspension system function to effectively if a trailer 30 is used to transport fragile goods, such as farm produce. Thus the suspension system is particularly useful in farming (although it can be used in any situation where vehicles with endless tracks are used).

For example, farm produce may be present on another trailer 37 that is transported by a trailer 30 with a suspension system of the present invention. Alternatively a second trailer is not essential and produce may be loaded directly onto the trailer with the suspension system 30.

The combination of the suspension system and the endless track 35 is particularly effective in transportation over terrain that is uneven and soft. It is also very effective in reducing ground compaction compared to systems used on conventional trailers.

In addition to the suspension housings 31, 50 described above, a similar housing 53 is also shown in Figure 7. However this is not operably connected to lower wheels 38, 39 but is attached to the longitudinal shaft 40 and is also connected to one end of a telescopic rod 54. This is achieved via a coupling 55. The coupling 55 can readily be engaged with or disengaged from the rod via a releasable securing means 56. This allows ease of maintenance. The coupling 55 passes over the top of the longitudinal shaft and also connects to a further housing on the other side of the shaft (not shown). The further housing is similar to housing 53 and also contains deformable members and a rigid member.

In Figure 7 the coupling 55 is shown attached to a plate 57. The plate 57 acts as a stiffener. It is also attached to the housing 53 and to the further housing on the other side of the longitudinal shaft 40. Thus it prevents the coupling 55 and the two housings from moving away from one another or distorting to an undesired degree (although a limited degree of movement is allowed).

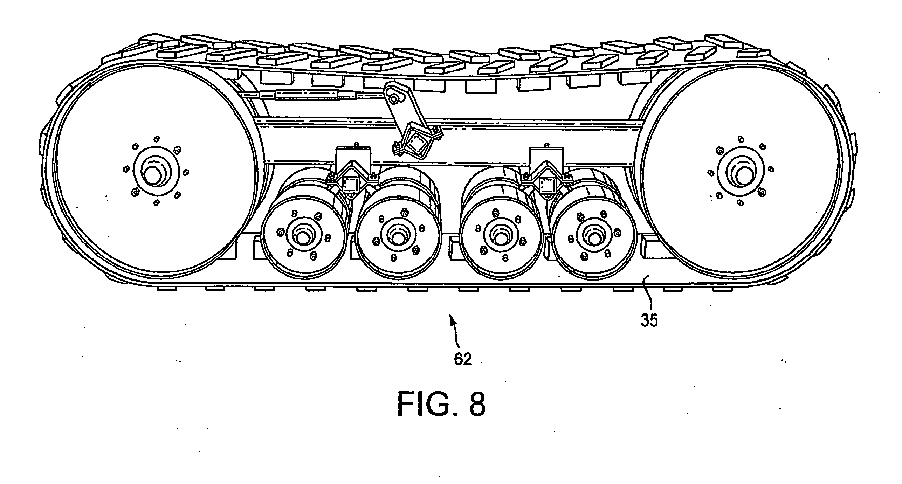

Thus the stiffener 57 contacts the coupling 55 and to the two housings and assists in preventing too much undesired flexing of these components relative to one another. It may be secured in place, e.g. by welding. Alternatively, it may be removably mounted. The stiffener 57 is however not essential and in many cases the coupling 55 will be of sufficient strength and rigidity so that a stiffener 57 s not required. Thus a stiffener 57 is not shown in Figures 6 and 8, for example.)

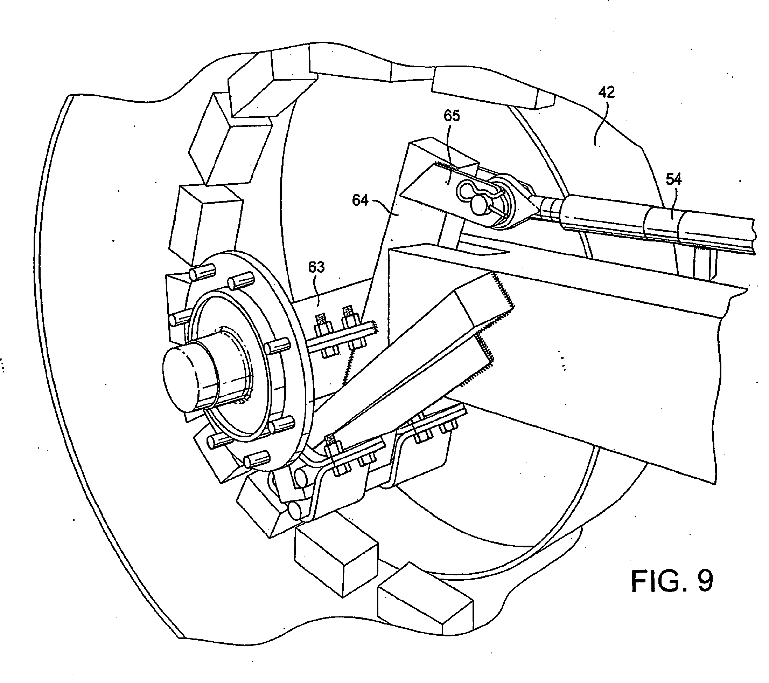

The telescopic rod 54 comprises inner and outer sections that mate with one another via interconnecting screw threads. A square knob 58 is provided on an outer part of the rod 54 so that it can be engaged by a socket, spanner or other tool and used to turn the outer part relative to an inner part and thereby to increase or decrease the overall length of the rod 54. As indicated above, one end of the rod 54 is operably connected to a square housing 53 that houses deformable members 59 and a rigid member 60. The other end of the rod 54 is connected via an arm to an axle upon which two large outer wheels 42 are mounted. (The arm and axle are not shown in this figure but an exposed arm and axle can be seen for illustration in Figure 9).

Thus by turning the knob 58 in one direction so as to increase the length of the rod 54 the outer wheels 42 are urged against the track 35 with increased force so as to increase the tension of the track 35. Alternatively, tension can be reduced by turning the knob 58 in the opposite direction so as to reduce the length of the rod 54. This can be useful for example in removing or replacing the track 35. It can also be useful for increasing flexibility when the track 35 is intended to be run over very uneven ground.

The track 35, wheels and suspension system are part of a unit that is mounted onto an axle 61 of the trailer. A corresponding unit 62 is present on the other side of the trailer.

Figure 8 shows such a unit 62 following initial manufacture but prior to attachment to an axle of the trailer. Such a unit 62 is within the scope of the present invention and may be sold as a replacement unit, or as a spare part, if desired.

Figure 9 shows a partial view of the left hand side of the unit 62 illustrated in Figure 8, but with one of the outer wheels 42 removed. It is useful in illustrating how the telescopic rod 54 is operably connected to an axle 63 on which outer wheels 42 of the unit run. Connection of the rod 64 to the axle is achieved via an intermediate, downwardly sloping arm 64. This is attached to the rod 54 via a pin and bracket assembly 65. This assembly 65 allows easy disengagement of the rod 64 when desired (e.g. for ease of maintenance).

## Claims

1. A first trailer (10) that can be used to load a second trailer thereon and to subsequently unload it; wherein the first trailer comprises a platform (11) for supporting the second trailer during transportation, engaging means (18) for releasably engaging the second trailer, first and second parallel drives (19), and a load-bearing member (16) that is operably connected to said drives (19); wherein the drives (19) are arranged so that they can be operated in a forwards direction in order to move the load-bearing member (16) towards the front of the trailer and so that they can be then operated in the reverse manner so as to move the load-bearing member ( 16) towards the rear of the trailer; **characterised in that** the first trailer (10) comprises a retaining means (17) arranged so that it can be moved over the engaging means (18) and/or over a drawbar of the second trailer, so as to prevent the engaging means (18) becoming accidentally disengages when the trailer (10) is in use.

2. A trailer (10) according to claim 1 that has means for distributing weight (13) as the trailer (10) is pulled by a vehicle, whereby the pressure that would be exerted on the ground by the first trailer with the second trailer loaded thereon is less than the pressure that would be exerted by the second trailer alone.

3. A trailer (10) according to claim 2; wherein the means for distributing weight (13) comprises one or more endless tracks.

4. A trailer (10) according to any preceding claim; wherein the platform (11) of the first trailer(10) is pivotally mounted so that it can be pivoted from a position suitable for transportation to a more inclined position suitable as a ramp for loading or unloading.

5. A trailer (10) according to any preceding claim comprising a stop that prevents the load-bearing member moving forwards beyond a given point and/or a stop that prevents the load-bearing member moving rearwards beyond a certain point.

6. A trailer (10) according to any preceding claim; wherein at least part of the underside of the platform (11) is shaped so that it can slide over ground when the platform (11) has been pivoted to contact the ground or wherein the underside of the platform (11) is provided with one or more skis, wheels, rollers or other supporting members.

7. A trailer (10) according to any preceding claim, wherein the trailer (10) has an adjustable width.

## Patentansprüche

1. Erster Anhänger (10), der zum Aufladen eines zweiten Anhängers darauf und zum nachfolgenden Abladen verwendet werden kann, wobei der erste Anhänger eine Pritsche (11) zum Stützen des zweiten Anhängers während des Transports, ein Eingriffsmittel (18) zur lösbaren Ineingriffnahme des zweiten Anhängers, einen ersten und einen zweiten parallelen Antrieb (19) und ein lasttragendes Element (16) umfasst, das betriebsmäßig mit den Antrieben (19) verbunden ist, wobei die Antriebe (19) so angeordnet sind, dass sie in einer vorwärtsgehenden Richtung betrieben werden können, um das lasttragende Element (16) zur Vorderseite des Anhängers zu bewegen, und so, dass sie umgekehrt betrieben werden können, um das lasttragende Element (16) zur Rückseite des Anhängers zu bewegen, **dadurch gekennzeichnet, dass** der erste Anhänger (10) ein HalLemillel (17) umfasst, das so angeordnet ist, dass es über das Eingriffsmittel (18) und/oder über die Deichsel des zweiten Anhängers bewegt werden kann, um zu verhindern, dass das Eingriffsmittel (18) versehentlich ausgerückt wird, wenn der Anhänger (10) im Einsatz ist.

2. Anhänger (10) nach Anspruch 1, der ein Mittel (13) zur Verteilung des Gewichts, während der Anhänger (10) von einem Fahrzeug gezogen wird, hat, wobei der Druck, der durch den ersten Anhänger mit dem darauf aufgeladenen zweiten Anhänger auf den Boden ausgeübt würde, geringer ist als der Druck, der vom zweiten Anhänger allein ausgeübt würde.

3. Anhänger (10) nach Anspruch 2, wobei das Mittel (13) zur Verteilung des Gewichts ein oder mehrere Endlos-Raupenlaufwerke umfasst.

4. Anhänger (10) nach einem der vorhergehenden Ansprüche, wobei die Pritsche (11) des ersten Anhängers (10) schwenkbar montiert ist, so dass sie aus einer für den Transport geeigneten Position in eine geneigtere Position, die sich als Rampe zum Auf- und Abladen eignet, geschwenkt werden kann.

5. Anhänger (10) nach einem der vorhergehenden Ansprüche, mit einem Anschlag, der verhindert, dass sich das lasttragende Element über einen gegebenen Punkt hinaus nach vorne bewegt, und/oder einem Anschlag, der verhindert, dass sich das lasttragende Element über einen gewissen Punkt hinaus nach hinten bewegt.

6. Anhänger (10) nach einem der vorhergehenden Ansprüche, wobei mindestens ein Teil der Unterseite der Pritsche (11) so geformt ist, dass sie über den Boden gleiten kann, wenn die Pritsche (11) so geschwenkt worden ist, dass sie den Boden kontaktiert, oder wobei die Unterseite der Pritsche (11) mit einem oder mohreren Skiern, Rädern, Rollen oder anderen Stützelementen versehen ist.

7. Anhänger (10) nach einem der vorhergehenden Ansprüche, wobei der Anhänger (10) eine verstellbare Breite hat.

## Revendications

1. Première remorque (10), qui peut être utilisée pour charger sur elle une deuxième remorque et pour la décharger ultérieurement, la première remorque comprenant une plate-forme (11) pour supporter la deuxième remorque au cours du transport, des moyens d'engagement (18) pour engager de manière amovible la deuxième remorque, des premier et deuxième entraînements parallèles (19), et un organe de support de charge (16) qui est connecté de manière fonctionnelle auxdits entraînements (19) ; les entraînements (19) étant agencés de telle sorte qu'ils puissent être activés dans une direction avant afin de déplacer l'organe de support de charge (16) vers l'avant de la remorque et de sorte qu'ils puissent ensuite être activés dans le sens inverse de manière à déplacer l'organe de support de charge (16) vers l'arrière de la remorque ; **caractérisée en ce que** la première remorque (10) comprend un moyen de retenue (17) agencé de manière à pouvoir être déplacé par-dessus les moyens d'engagement (18) et/ou par-dessus une barre d'attelage de la deuxième remorque, de manière à empêcher que les moyens d'engagement (18) ne se désengagent accidentellement lors de l'utilisation de la remorque (10).

2. Remorque (10) selon la revendication 1, présentant des moyens pour répartir le poids (13) alors que la remorque (10) est tirée par un véhicule, la pression qui serait exercée sur le sol par la première remorque sur laquelle est chargée la deuxième remorque étant inférieure à la pression qui serait exercée par la deuxième remorque seule.

3. Remorque (10) selon la revendication 2, dans laquelle les moyens pour répartir le poids (13) comprennent une ou plusieurs pistes sans fin.

4. Remorque (10) selon l'une quelconque des revendications précédentes, dans laquelle la plate-forme (11) de la première remorque (10) est montée à pivotement de telle sorte qu'elle puisse être pivotée d'une position appropriée pour le transport dans une position plus inclinée appropriée en tant que rampe pour le chargement ou le déchargement.

5. Remorque (10) selon l'une quelconque des revendications précédentes, comprenant une butée qui empêche l'organe de support de charge de se déplacer vers l'avant au-delà d'un point donné et/ou une butée qui empêche l'organe de support de charge de se déplacer vers l'arrière au-delà d'un certain point.

6. Remorque (10) selon l'une quelconque des revendications précédentes, dans laquelle au moins une partie du côté inférieur de la plate-forme (11) est dimensionnée de telle sorte qu'elle puisse glisser au-dessus du sol lorsque la plate-forme (11) a été pivotée pour venir en contact avec le sol ou dans laquelle le côté inférieur de la plate-forme (11) est pourvu d'un ou de plusieurs skis, de roues, de rouleaux ou d'autres organes de support.

7. Remorque (10) selon l'une quelconque des revendications précédentes, dans laquelle la remorque (10) a une largeur ajustable.
